# EUROPEAN PATENT APPLICATION

(11) **EP 2 073 018 A1**
(43) Date of publication of application: **24.06.2009**
(21) Application number: 07807759.1
(22) Date of filing: 21.09.2007
(51) Int. Cl.: G01N 35/10

(54) **LIQUID SUCTION DEVICE**

(30) Priority: 22.09.2006 JP 2006256775
(71) Applicant: Fujifilm Corporation, Tokyo 106-8620 (JP); Wako Pure Chemical Industries, Ltd., Amagasaki-shi, Hyogo 661-0963 (JP)
(72) Inventor: HIBE, Daisuke, Ashigarakami-gun Kanagawa 258-0023 (JP); KUROSAWA, Tatsuo, Amagasaki-shi Hyogo 661-0963 (JP); KAWABATA, Tomohisa, Amagasaki-shi Hyogo 661-0963 (JP); HAYASHI, Masayoshi, Amagasaki-shi Hyogo 661-0963 (JP)
(74) Representative: Klunker . Schmitt-Nilson . Hirsch
(86) International application number: PCT/JP2007/068428
(87) International publication number: WO 2008/035777

(57) **Abstract**

A liquid suction device for efficiently suctioning a liquid remaining at an edge portion of the bottom surface of a well. The liquid suction device used to suction a liquid contained in a well (8) of a microchip (8') which includes the well (8) and a microchannel (82a) in fluid communication with the well (8). The liquid suction device includes: a suction nozzle (2) having a tip opening (2a) at a tip thereof and being connected to piping at a rear end thereof, the suction nozzle (2) suctioning the liquid through the tip opening (2a) ; a pump connected to the piping, the pump supplying a suction pressure to the suction nozzle (2) ; and a driving unit for moving the suction nozzle (2) relative to the well (8) . The suction nozzle (2) is moved by the driving unit until the tip opening (2a) contacts a bottom surface of the well (8) while the suction nozzle (2) applies a suction force produced by the suction pressure supplied by the pump, thereby enabling suction of the liquid from the well (8) and/or the microchannel (82a).

## Description

### TECHNICAL FIELD

The present invention relates to a liquid suction device which suctions a liquid with a suction nozzle, and in particular to a liquid suction device which suctions a liquid contained in wells of a microchip.

### BACKGROUND ART

Enzyme immunological analyzers, which use a microplate having a plurality of liquid receptacles, which serve as reaction wells where a sample and/or a reagent are reacted, have conventionally been known. Theses apparatuses generally includes a dispensing unit for dispensing a sample and a reagent, a shaking unit and a temperature controller unit for promoting the reaction, a cleaning unit for cleaning the liquid receptacles, etc., and these units are separately operated by the operator. In the cleaning unit, among these units, however, when a rinsing liquid remaining in the liquid receptacles is suctioned with a suction nozzle, the rinsing liquid may still remain at the edge portions of the bottom surfaces of the liquid receptacles, and the remaining rinsing liquid may vary the measurement results of the enzyme immunoreaction.

Therefore, a method has been disclosed, in which the suction nozzle is positioned at the center of each liquid receptacle, and the rinsing liquid is suctioned with moving the suction nozzle downward. Then, the suction nozzle is moved to the edge portion of the bottom surface of the liquid receptacle to further suction the rinsing liquid, thereby suctioning the rinsing liquid remaining at the edge portion of the bottom surface (Japanese Unexamined Patent Publication No. 8(1996)-297125).

On the other hand, in recent years, in the fields of chemicals, optics, clinical technology, biotechnology, etc., clinical analysis apparatuses have been developed, which use a microchip including a micro-sized circuit (so-called microchannels) formed on a substrate using a micromachining technology, which is commonly used for semiconductors, etc. The microchip includes wells serving as liquid receptacles, which are in fluid communication with the microchannels. The microchip is used, for example, as a biochip which allows efficient microanalysis of a biological material, such as DNA, in cooperation with an electrophoresis analysis system. On the microchip, a series of analysis process steps, such as extraction of a component to be analyzed from the biological material (an extraction step), analysis of the component to be analyzed using a chemical/biochemical reaction (an analysis step), separation (a separation step) and detection (a detection step), are integrated. This integrated system is also called as µ-TAS (micro-TAS), Lab-on-a-Chip, etc.

In the above-described liquid suction method, however, the suction nozzle is moved down to the center portion of the liquid receptacle to suction the liquid, and then is further moved to the edge portion to suction the liquid, in order to reliably suction the liquid remaining at the edge portion of the bottom surface of the liquid receptacle. Therefore, it is necessary to move the suction nozzle in at least two directions, and this is not an efficient way for suctioning a slight amount of liquid.

### DISCLOSURE OF THE INVENTION

In view of the above-described circumstances, the present invention is directed to providing a liquid suction device which efficiently suctions a liquid remaining in liquid receptacles, in particular, at edge portions of bottom surfaces of wells of a microchip.

The liquid suction device of the invention is a liquid suction device for suctioning a liquid contained in a well of a microchip, the microchip including the well for containing the liquid and a microchannel in fluid communication with the well, the liquid suction device including: a suction nozzle having a tip opening at a tip thereof and being connected to piping at a rear end thereof, the suction nozzle suctioning the liquid through the tip opening; a pump means connected to the piping, the pump means supplying a suction pressure to the suction nozzle; and a moving means for moving the suction nozzle relative to the well, wherein the suction nozzle is moved by the moving means until the tip opening contacts a bottom surface of the well while the suction nozzle applies a suction force produced by the suction pressure, thereby enabling suction of the liquid from the well and/or the microchannel.

In the liquid suction device of the invention, it is preferred that, after the suction nozzle has contacted the bottom surface of the well, the moving means causes relative movement of the suction nozzle in a direction away from the bottom surface of the well while the suction nozzle applies the suction force.

In the liquid suction device of the invention, the tip opening is preferably formed to be parallel to the bottom surface of the well.

The liquid suction device of the invention may further include a cushioning mechanism for cushioning the contact between the tip opening of the suction nozzle and the bottom surface of the well when the suction nozzle is moved down.

In the liquid suction device of the invention, the cushioning mechanism is preferably formed by an elastic member.

According to the liquid suction device of the invention, the suction nozzle is moved by the moving means until the tip opening contacts the bottom surface of the well while the suction nozzle applies the suction force produced by the suction pressure supplied by the pump means. Therefore, as the tip opening approaches the bottom surface of the well, the distance between the tip opening, which suctions the liquid, and the liquid remaining in the well decreases, and the flow rate in the liquid remaining in the well increases. In this manner, even if the liquid contained in the well has a high viscosity, for example, and the liquid F adheres to the circumferential surface, in particular the edge portion, of the well and remains there due to the surface tension, etc., of the liquid, the remaining liquid can more easily be suctioned since the adhered liquid can be more easily separated due to the increased flow rate in the remaining liquid F. Therefore, the amount of the liquid remaining in the well can be reduced.

Further, in the aspect of the liquid suction device of the invention in which the moving means causes relative movement of the suction nozzle in a direction away from the bottom surface of the well while the suction nozzle applies the suction force after the suction nozzle has contacted the bottom surface of the well, the suction nozzle is moved away from the bottom surface of the well after the tip opening has contacted the bottom surface of the well to be substantially sealed by the bottom surface and a negative pressure has been generated inside the suction nozzle. Therefore, when the suction nozzle is moved away from the bottom surface of the well, the negative pressure generates a suction force. Since the suction nozzle is still applying the suction force at this time, the suction force applied by the suction nozzle includes both the suction force provided by the pump and the suction force provided by the negative pressure. Thus, the suction force applied by the suction nozzle can be increased. Therefore, even if the liquid still remains at the edge portion of the well, the liquid F can be suctioned with a stronger suction force.

As described above, the liquid remaining at the bottom edge portion of the well can efficiently be suctioned only by moving the suction nozzle, which applies the suction force, in one direction, i.e., in the vertical direction. In this manner, such a situation that the liquid remaining at the edge portions of the bottom surfaces of the wells of the microchip is introduced into the microchannels during a microanalysis operation can be prevented, thereby preventing contamination and improving accuracy of the microanalysis.

Further, in the aspect of the liquid suction device of the invention in which the tip opening of the suction nozzle is formed to be parallel to the bottom surface of the well, a larger contact area can be provided when the tip opening contacts the bottom, and this enhances the sealing property. Further, when the tip opening approaches the bottom surface of the well, the distance between the tip opening and the bottom surface of the well is the same at any portion of the edge of the tip opening. Therefore, the flow rate in the remaining liquid F can be made uniform and the liquid F can be evenly suctioned.

Further, in the aspect of the liquid suction device of the invention further including a cushioning mechanism for cushioning the contact between the tip opening of the suction nozzle and the bottom surface of the well when the suction nozzle is moved down, the cushioning mechanism can prevent the tip of the suction nozzle from being further moved down by the moving means and pressed against the bottom of the well, thereby preventing damage, etc., of the suction nozzle.

### BRIEF DESCRIPTION OF THE DRAWINGS

FIG. 1 is a diagram illustrating the configuration of a liquid suction device according to the present embodiment,
FIG. 2 is a diagram for explaining how a liquid contained in a well is suctioned by the liquid suction device of the present embodiment,
FIG. 3 shows perspective views and a sectional view of a microchip,
FIG. 4 is a diagram for explaining how the liquid remaining at a well bottom portion is suctioned by the liquid suction device of the present embodiment,
FIG. 5 is a diagram illustrating the structure of a cushioning mechanism,
FIG. 6 is a diagram illustrating operation of a suction nozzle, and
FIG. 7 is a diagram illustrating the configuration of a liquid suction device according to another embodiment.

### BEST MODE FOR CARRYING OUT THE INVENTION

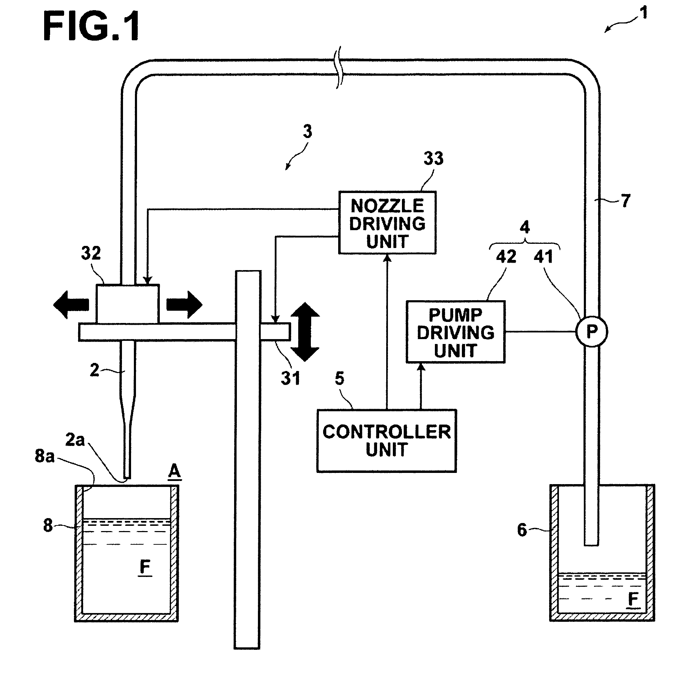

Hereafter, one embodiment of a liquid suction device 1 according to the present invention is described in detail with reference to the drawings. FIG. 1 shows the configuration of the liquid suction device 1 of this embodiment. It should be noted that the direction in which a tip opening 2a of a suction nozzle 2 of the liquid suction device 1 of this embodiment faces is referred to as "downward" (downward in the drawing), for convenience.

The liquid suction device 1 of this embodiment is incorporated into a clinical analysis apparatus, such as a biochemical analyzer, used at a medical institution, a research institute, etc. The liquid suction device 1 is used to suction a liquid, such as a sample, a reagent or a rinsing liquid, which is contained in containers, such as test tubes or a plurality of wells, which serve as liquid receptacles, formed in a microchip. The liquid suction device 1 is mainlyused to suction a liquid, such as a rinsing liquid (for example, water) remaining in the containers during a step of cleaning the containers, which does not require accuracy of the amount of liquid to be suctioned.

As shown in FIG. 1, the liquid suction device 1 generally includes: the suction nozzle 2; a nozzle driving unit 33, serving as a moving means 3, which includes a vertical movement mechanism unit 31 for moving the suction nozzle 2 in the vertical direction (the depth direction of a receptacle (or container) 8) and a horizontal movement mechanism unit 32 for moving the suction nozzle 2 in the horizontal direction; a suction pump 41 and a pump driving unit 42, serving as a pump means 4, which supply a suction pressure to the suction nozzle 2; a controller unit 5 which controls the nozzle driving unit 33 and the pump driving unit 42; a waste liquid tank 6 which stores a liquid F suctioned by the suction nozzle 2; and piping 7 which connects between the suction nozzle 2 and the waste liquid tank 6.

The suction nozzle 2 is substantially cylindrical, and includes the tip opening 2a, through which the liquid F is suctioned. The suction nozzle 2 is disposed with the tip opening 2a facing down so as to be movable in the vertical and horizontal directions by the vertical movement mechanism unit 31 and the horizontal movement mechanism unit 32. The vertical movement mechanism unit 31 and the horizontal movement mechanism unit 32 are formed, for example, by a transport mechanism such as a power transmission mechanism using a pulley or a ball screw mechanism, and drive control of these mechanisms is achieved by a motor, etc., provided in the nozzle driving unit 33. The suction nozzle 2 is moved by the controller unit 5, which is described later, so that the receptacle 8 containing the liquid F is positioned below the tip opening 2a of the suction nozzle 2.

It should be noted that, on the tip opening 2a of the suction nozzle 2, a tip in the form of a pipette, which can be replaced depending on the type of the liquid F, may be attached. Although the suction nozzle 2 of the liquid suction device 1 of this embodiment can be moved above the receptacle 8 by the nozzle driving unit 33, this is not intended to limit the liquid suction device of the invention. The nozzle driving unit 33 may not include the horizontal movement mechanism unit 32, and the receptacle 8, for example, may be provided with a moving means that can move the receptacle 8 below the suction nozzle 2. That is, it suffices that the relative movement between the suction nozzle 2 and the receptacle 8 can be achieved.

One end of the piping 7 is connected to the upper portion of the suction nozzle 2, and the other end of the piping 7 is connected via the suction pump 41 to the substantially cylindrical waste liquid tank 6 having the open upper end. Although the waste liquid tank 6 of this embodiment is formed by a substantially cylindrical container with the open upper end, this is not intended to limit the invention. The waste liquid tank 6 may have any shape, such as a rectangular cylinder or a spherical container, as long as it can store the liquid F, and the shape of the waste liquid tank 6 may be changed as appropriate.

The suction pump 41 supplies a suction pressure to the suction nozzle 2, and drive control of the suction pump 41 is achieved by the pump driving unit 42 provided with a motor, etc. The suction pump 41 uses the liquid F as a pressure medium. The suction pump 41 may be formed by any of various types of pumps, such as a centri fugal pump, an axial flow pump, a reciprocating pump or a rotary pump, and the type of the pump may be changed as appropriate.

The controller unit 5 is provided with data about the position and the shape of the receptacle 8, data about the suction pressure of the suction pump 41, and data about the diameter of the piping 7, and controls the nozzle driving unit 33 and the pump driving unit 42 based on these data. These data may be changeable by the user, as necessary. The data about the shape of the receptacle 8 includes data about a maximum sectional area S of the interior of the receptacle 8 along a plane parallel to the liquid level of the liquid F contained in the receptacle 8, i.e., in the horizontal direction. In the invention, the interior of the receptacle refers to a space in the receptacle in which the liquid can be held.

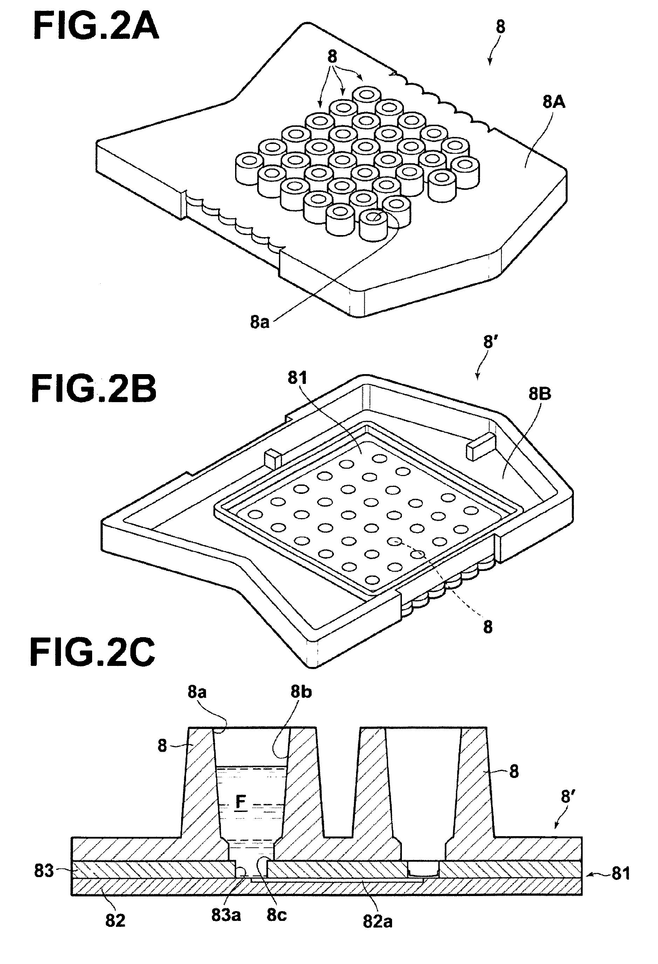

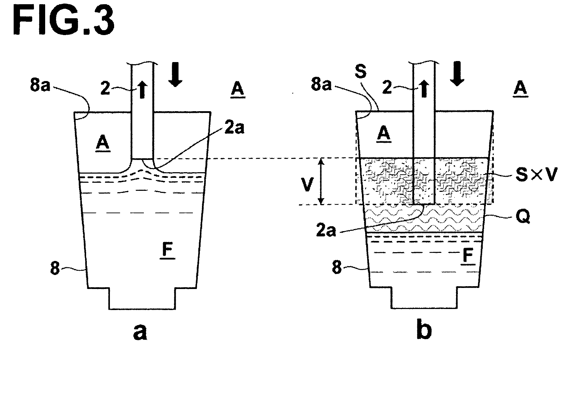

FIG. 2(a) is a perspective view of a microchip 8' provided with the wells 8 serving as the receptacles in this embodiment, FIG. 2(b) is a perspective view of the microchip 8' of FIG. 2 (a) viewed from below, FIG. 2(c) is a sectional view of the wells 8 of FIG. 2(a), and FIG. 3 is a diagram for explaining how the liquid F in the wells 8 is suctioned by the liquid suction device 1 of the invention. It should be noted that the side of the microchip 8' of this embodiment provided with openings 8a of the wells 8 (the upper side in each drawing) is referred to as the upper side, for convenience.

The receptacles 8 of this embodiment are liquid receptacles formed in the microchip 8' , and are generally called wells. As shown in FIG. 2(a), the microchip 8' has a substantially rectangular shape or an arrow-like shape and is formed of a synthetic resin. The microchip 8' includes the plurality of wells 8 formed on an upper surface 8A thereof. As shown in FIG. 2(b), a glass plate (a transparent plate member) 81 is attached at a lower surface 8B of the microchip 8'. As shown in FIG. 3(c), the glass plate 81 is formed by a first substrate 82 and a second substrate 83 bonded to the upper surface of the substrate 82. The first substrate 82 includes microchannels 82a formed in the upper surface thereof, and the second substrate 83 includes through holes 83a (well bottom portion 83a), which are in fluid communication with the microchannels 82a and form the bottom portions of the wells.

Each well 8 includes the opening 8a at the upper end thereof, and a well taper portion 8b, which extends downward from the opening 8a to join to the well bottom portion 83a. The well taper portion 8b is formed such that the diameter thereof gradually decreases from the upper end to the lower end. Since the well bottom portion 83a has an even smaller diameter, the maximum sectional area S of the well 8 is equal to the area at the upper end opening 8a, and an annular step portion 8c is formed at the boundary between the well taper portion 8b and the well bottom portion 83a. The first substrate 81 and the second substrate 82 maybe formed of a synthetic resin, besides glass, and both of them may be transparent, or only one of them, through which optical measurement is carried out, maybe transparent. Although the microchannels 82a are formed in the first substrate 82 in this embodiment, this is not intended to limit the microchip used with the liquid suction device of the invention. The microchannels 82a may be formed in the second substrate 83, as long as the microchannels 82a are formed between the first substrate 82 and the second substrate 83.

The liquid F contained in the wells 8 of microchip 8' having the above-described structure is suctioned by the liquid suction device 1 described above. As a anterior step in a suction operation, the suction nozzle 2 is moved down to suction the liquid F such that the liquid F does not adhere to the outer surface of the nozzle 2. Then, as a posterior step, the nozzle 2 is further moved down until the tip opening 2a of the suction nozzle 2 contacts the bottom surface of the well bottom portion 83a. First, the anterior step is described in detail.

The suction nozzle 2 of the liquid suction device 1 is moved in the depth direction (downward) at a constant traveling speed V by the nozzle driving unit 33, and suctions the liquid F with a suction force, which is generated in the suction nozzle 2 by a suction pressure supplied from the suction pump 41, before the suction nozzle 2 contacts the liquid F, i.e., at a suction rate Q per unit time, which satisfies Q > S×V. That is, the suction nozzle 2 is moved down by the nozzle driving unit 33 at the constant traveling speed V from the position in which the tip opening 2a is positioned above the well 8 (see the arrows in FIG. 3) . Before the suction nozzle 2 contacts the liquid F, the suction pressure has already been supplied to the suction nozzle 2 from the suction pump 41, and the suction rate per unit time, which is achieved by the suction force generated in the suction nozzle 2 by the suction pressure, has already satisfied Q > S×V. The suction rate Q per unit time herein refers to a volume of the liquid F which can be suctioned by the suction nozzle 2 per unit time. The suction pressure has been supplied by the suction pump 41 before the downward movement of the suction nozzle 2 is started. In this manner, the suction nozzle 2 can start the suction of the liquid F with the stable suction rate Q, without being influenced by lowering of the suction rate Q due to the shape of the piping 7, characteristics of the start-up time of the pump means 4, etc.

In the liquid suction device 1 of this embodiment, the suction nozzle 2 suctions the liquid F before the suction nozzle 2 contacts the liquid F, however, this is not intended to limit the liquid suction device of the invention. The suction nozzle 2 may suction the liquid F as soon as the suction nozzle 2 contacts the liquid F, as long as the liquid F does not adhere to the outer surface of the suction nozzle 2. Although the pump driving unit 42 is controlled by the controller unit 5 in the liquid suction device 1 of this embodiment, this is not intended to limit the invention. Manual control may be used as long as the suction pressure can be supplied to the suction nozzle 2 before or as soon as the suction nozzle 2 contacts the liquid F.

As described above, the suction nozzle 2 is moved down with the suction rate Q per unit time is ensured. Therefore, the suction nozzle 2 suctions air A while being moved down. The suction nozzle 2 suctioning the air A continues to be moved down toward the liquid level of the liquid F, and suctions the liquid F in the well 8 when the suction nozzle 2 reaches a predetermined position above the liquid level, as shown in FIG. 3(a). Since the liquid suction device 1 of this embodiment is used in a cleaning step of the wells 8, etc., which does not require accuracy of the suction rate of the liquid F, there is no problem in suctioning the air A. While the suction nozzle 2 suctions the liquid F and/or the air A at the suction rate Q per unit time, the suction nozzle 2 is further moved down at the constant traveling speed V.

Since the inner circumferential surface of the well taper portion 8b is tapered, the interior volume of the well 8 across which the tip opening 2a of the suction nozzle 2 is moved per unit time is always different depending on the position of the tip opening 2a of the suction nozzle 2 in the depth direction. Since it suffices that the suction rate Q per unit time of the liquid suction device 1 is larger than the interior volume of the well 8 across which the tip opening 2a of the suction nozzle 2 is moved per unit time, a hypothetical volume S×V, which is larger than the interior volume of the well 8 across which the tip opening 2a of the suction nozzle 2 is actually moved, is calculated from the maximum sectional area S of the well 8 and the traveling speed V of the suction nozzle 2, to set the suction rate Q which is larger than the hypothetical volume S×V (see FIG. 3(b)).

Since the suction rate Q, i.e., the volume of the liquid F and the air A suctioned by the suction nozzle 2 per unit time, is set to be larger than the hypothetical volume S×V, the tip opening 2a of the suction nozzle 2 is always positioned above the liquid level and the suction nozzle 2 does not contact the liquid F. Thus, the liquid F does not adhere to the outer surface of the suction nozzle 2, and the outer surface of the suction nozzle 2 of the liquid suction device 1 of this embodiment can be prevented from being contaminated. In this manner, adhesion of the liquid to the outer surface of the suction nozzle 2 can be prevented without providing a complicated control mechanism which includes, for example, a liquid level detection mechanism, etc., and this saves space as well as cost for providing such a mechanism. In the liquid suction device 1 of this embodiment, in order to satisfy Q > S×V, the value of the traveling speed V may be varied or the value of the suction rate Q may be varied. These can be changed as appropriate.

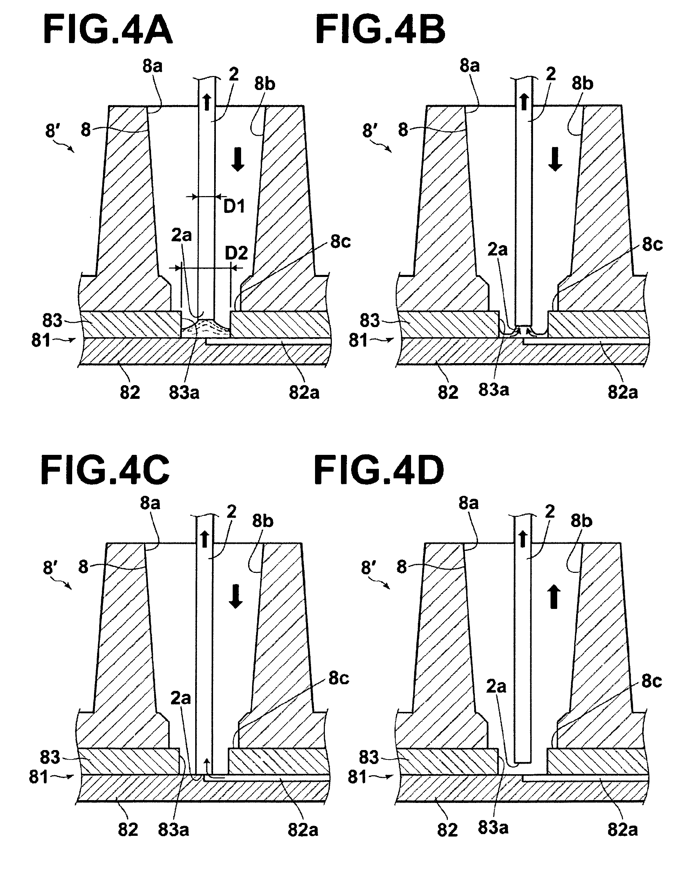

Next, the posterior step is described in detail. While the suction nozzle 2 suctions the liquid F, the suction nozzle 2 is further moved down by the nozzle driving unit 33 from the position shown in FIG. 3(b) toward the well bottom portion 83a. At this time, all the liquid F in the well 8 including the liquid F at the well bottom portion 83a may have been suctioned by the suction nozzle 2, or the liquid F may remain at the well bottom portion 83a (see FIG. 4(a)). That is, it suffices that the suction nozzle 2 applies the suction force provided by the suction pressure supplied from the pump 41, and the suction nozzle 2 may, for example, suction only the air A without suctioning the liquid F. The characteristic feature of the invention is that the suction nozzle 2 is moved down with applying the suction force until the tip opening 2a of the suction nozzle 2 contacts the bottom surface of the well bottom portion 83a. FIG. 4 is a diagram for explaining how the liquid F remaining at the well bottom portion 83a is suctioned by the liquid suction device 1 of this embodiment.

As the suction nozzle 2 is moved down with applying the suction force, as described above, the tip opening 2a is positioned in the well bottom portion 83a, as shown in FIG. 4(a). At this time, the suction nozzle 2 is moved down with suctioning the liquid F if the liquid F still remains at the well bottom portion 83a. Then, the suction nozzle is further moved down in the similar manner, as shown in FIG. 4 (b) . As the tip opening 2a of the suction nozzle 2 approaches the bottom surface of the well bottom portion 83a, the distance between the tip opening 2a, from which the suction force is applied, and the liquid F remaining at the well bottom portion 83a decreases, and the flow rate in the liquid F remaining at the well bottom portion 83a (indicated by the arrow shown in the liquid at the well bottom portion in the drawing) increases.

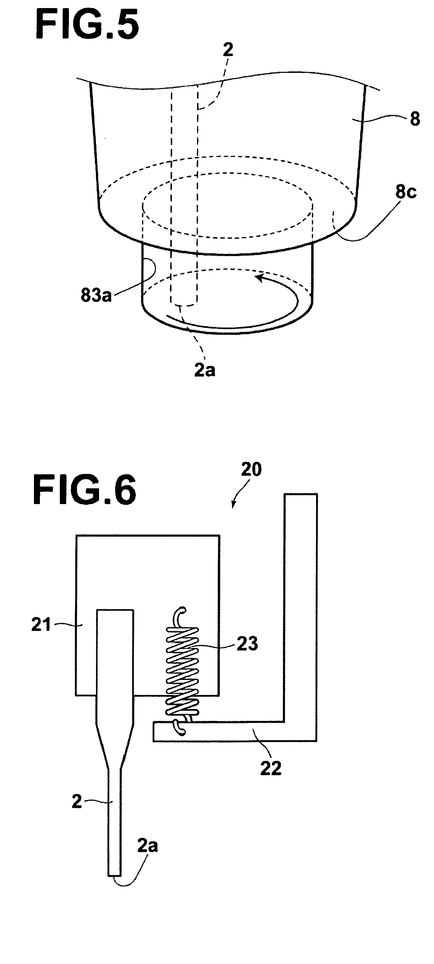

In this manner, even if the liquid F contained in the well 8 has a high viscosity, for example, and the liquid F adheres to the circumferential surface, in particular the edge portion, of the well bottom portion 83a and remains there due to the surface tension of the liquid F, the remaining liquid F can more easily be suctioned since the adhered liquid F can be more easily separated due to the increased flow rate in the remaining liquid F. Thus, the amount of the liquid F remaining at the well bottom portion 83a can be reduced. The tip opening 2a may be moved down toward the substantial center of the well bottom portion 83a, or may be moved down toward the edge portion of the well bottom portion 83a. This can be changed as appropriate. As shown in FIG. 5, the tip opening 2a may be moved down along the edge portion of the bottom surface of the well bottom portion 83a. This allows reliable suction of the liquid F remaining at the edge portion of the bottom surface of the well bottom portion 83a.

Then, as shown in FIG. 4(c), the suction nozzle 2 is further moved down with applying the suction force, until the tip opening 2a contacts the bottom surface of the well 8, i.e., the bottom surface of the well bottom portion 83a. Then, the tip opening 2a of the suction nozzle 2 abuts on the bottom surface of the well bottom portion 83a, and the tip opening 2a is substantially sealed by the bottom surface of the well bottom portion 83a. In this state, a negative pressure is generated inside the suction nozzle 2. The tip opening 2a of the suction nozzle 2 of this embodiment is formed to be parallel to the bottom surface of the well bottom portion 83a to enhance the sealing property. Further, when the tip opening 2a approaches the bottom surface of the well bottom portion 83a, as described above, the distance between the tip opening 2a and the bottom surface of the well bottom portion 83a is the same at any portion of the edge of the tip opening 2a. Therefore, the flow rate can be made uniform at the entire edge of the tip opening 2a and the liquid F can be evenly suctioned. The tip opening 2a may have an uneven shape or a saw-like shape, as long as the sealing property is not excessively lowered.

Since the liquid suction device of the invention is used to suction the liquid F contained in the wells 8 of the microchip 8', which includes the microchannels 82a in fluid communication with the wells 8, a clearance, through which the air and/or the liquid can flow in from or flow out to the microchannel 82a, is formed between each tip opening 2a and the bottom surface of each well bottom portion 83a, as shown in FIG. 4(c). The clearance can prevent generation of an excessive negative pressure inside the suction nozzle 2, which may otherwise lead to damage of the suction nozzle 2, the motor of the nozzle driving unit 33, etc. Further, this facilitates suction of the air and/or the liquid from the microchannels 82a.

Then, as shown in FIG. 4(d), the suction nozzle 2 is moved up from the substantially sealed state, with applying the suction force, in the direction in which the tip opening 2a is moved away from the bottom surface of the well bottom portion 83a. Since the negative pressure is generated inside the suction nozzle 2, the liquid and/or the air flow into the suction nozzle 2 through between the tip opening 2a and the bottom surface of the well bottom portion 83a. Since the suction nozzle 2 is still applying the suction force at this time, the suction force applied by the suction nozzle 2 includes both the suction force provided by the pump 41 and a suction force generated by the negative pressure. Thus, the suction force applied by the suction nozzle 2 can be increased. Therefore, even if the liquid F still remains at the edge portion of the well bottom portion 83a, the liquid F can be suctioned with a stronger suction force.

As described above, according to the liquid suction device 1 of this embodiment, the liquid F remaining at the edge portion of the bottom surface of the well 8, i.e., the well bottom portion 83a, can efficiently be suctioned only by moving the suction nozzle 2 in one direction i.e., in the vertical direction, by the nozzle driving unit 33 while the suction nozzle 2 applies the suction force. In this manner, such a situation that the liquid F remaining at the edge portions of the bottom surfaces of the well bottom portions 83a of the microchip 8' is introduced into the microchannels 82a during a microanalysis operation can be prevented, thereby preventing contamination and improving accuracy of the microanalysis. In addition, the residual liquid in the microchannels 82a can be suctioned, thereby preventing contamination.

Examples of the liquid F in this embodiment may include an analytical reagent, a test sample, a rinsing liquid, cleaning water, etc.

In the liquid analysis device 1 of this embodiment, an outer diameter D1 of the suction nozzle is preferably in the range from 0.5 to 1.2 mm. A diameter D2 of the well bottom portion is preferably in the range from 1.2 mm to 2.2 mm. Further, the relationship between the outer diameter D1 of the suction nozzle and the diameter D2 of the well bottom portion is preferably: (D2-D1) / 2 < 0.6 mm (see FIG. 4(a) for the reference symbols).

Next, a second embodiment of the liquid suction device according to the invention is described. The liquid suction device of this embodiment includes a cushioning mechanism 20 in addition to the components of the liquid suction device 1 of the above-described embodiment, and therefore only the cushioning mechanism 20 is explained. FIG. 6 shows the structure of the cushioning mechanism 20.

As shown in FIG. 6, the cushioning mechanism 20 of this embodiment includes: a support member 21 which fixes and supports the rear end of the suction nozzle 2; a fixing member 22 being fixed to the vertical movement mechanism unit 31 and the horizontal movement mechanism unit 32 (not shown) to be moved in conjunction with the mechanism units 31 and 32; and a spring member 23 serving as an elastic member, with the upper end thereof engaging with the support member 21 and the lower end thereof engaging with the fixing member 22.

When the suction nozzle 2 is moved down and the tip opening 2a of the nozzle 2 contacts the bottom surface of the well bottom portion 83a, as described above, and if, for example, the suction nozzle 2 is moved down excessively by the nozzle driving unit 33, the repulsive force of the spring member 23 of the cushioning mechanism 20 moves the suction nozzle 2 relatively upward via the support member 21. Thus, the contact between the tip opening 2a of the suction nozzle 2 and the bottom surface of the well bottom portion 83a can be cushioned, thereby preventing damage of the suction nozzle 2, lowering of accuracy of the nozzle driving unit 33, etc. It should be noted that the cushioning mechanism 20 may alternatively be provided on the well 8 side.

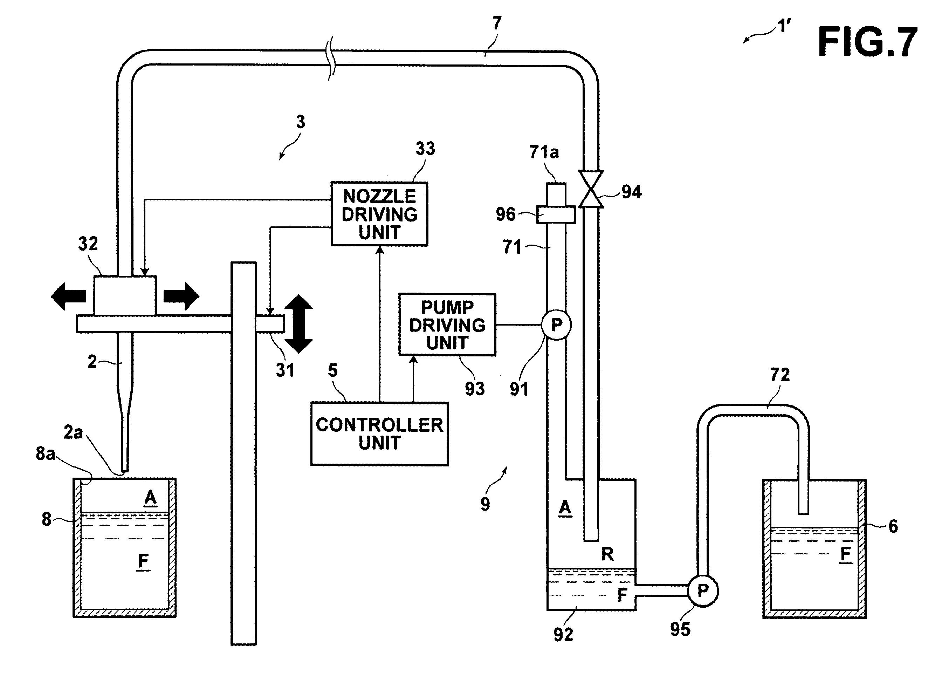

Although the liquid suction device 1 of the above-described two embodiments uses the liquid F as the pressure medium for suctioning the liquid F, this is not intended to limit the invention. The air A may be used as the pressure medium. FIG. 7 shows the configuration of a liquid suction device 1' of a third embodiment. Components of the liquid suction device 1' which are the same as those of the above-described liquid suction device 1 are designated by the same reference numerals and explanations thereof are omitted.

As shown in FIG. 7, the liquid suction device 1' of this embodiment includes: the suction nozzle 2; the nozzle driving unit 33, serving as the moving means, which includes the vertical movement mechanism unit 31 for moving the suction nozzle 2 in the vertical direction (the depth direction of the receptacle 8) and the horizontal movement mechanism unit 32 for moving the suction nozzle 2 in the horizontal direction; a negative pressure pump 91, which serves as a pump means 9 for supplying a suction pressure to the suction nozzle 2, a negative pressure chamber 92, a pump driving unit 93 and a second piping 71 connecting these components; the controller unit 5 which controls the nozzle driving unit 33 and the pump driving unit 93; the waste liquid tank 6 which stores a liquid F suctioned by the suction nozzle 2; the piping 7 which connects between the suction nozzle 2 and the negative pressure chamber 92; a third piping 72 which connects between the negative pressure chamber 92 to the waste liquid tank 6; an opening and closing valve 94 disposed at the piping 7; and a pump 95 connected to the third piping 72.

The other end of the piping 7, which has the one end connected to the suction nozzle 2, is inserted into the negative pressure chamber 92 via the opening and closing valve 94. The negative pressure chamber 92 has a space R therein, which contains the gas A (air A) and is sealed. One end of the second piping 71 is connected to the negative pressure chamber 92 in fluid communication with the space R. The second piping 71 includes at the other end thereof an opening 71a, which is in fluid communication with the ambient air, and the negative pressure pump 91 is connected to the middle of the second piping 71. Driving of the negative pressure pump 91 is controlled by the pump driving unit 93 including a motor, etc. The negative pressure pump 91 suctions the air A in the space R and discharges the air A through the opening 71a to generate a negative pressure in the space R. The negative pressure generated in the space R serves as the suction pressure supplied to the suction nozzle 2, and the suction pressure provides the suction force of the suction nozzle 2. At this time, the suction rate per unit time of the suction nozzle 2 satisfies Q > S×V, similarly to the above-described embodiment. Then, the suction nozzle 2 is moved down with applying the suction force until the suction nozzle 2 contacts the bottom surface of the well bottom portion 83a, similarly to the above-described embodiment, and the liquid F suctioned by the suction nozzle 2 is discharged into the negative pressure chamber 92 through the piping 7. In order to prevent the vapor and/or droplets of the liquid F discharged into the negative pressure chamber from flowing out, a filter 96 is disposed between the negative pressure pump 91 and the opening 71a. Then, the liquid F in the negative pressure chamber 92 is discharged to the waste liquid tank 6 via the third piping 72 connected to the negative pressure chamber 92 by the pump 95 connected to the third piping 72.

## Claims

1. A liquid suction device for suctioning a liquid contained in a well of a microchip, the microchip including the well for containing the liquid and a microchannel in fluid communication with the well, the liquid suction device comprising:
a suction nozzle comprising a tip opening at a tip thereof and being connected to piping at a rear end thereof, the suction nozzle suctioning the liquid through the tip opening;
a pump means connected to the piping, the pump means supplying a suction pressure to the suction nozzle; and
a moving means for moving the suction nozzle relative to the well,
wherein the suction nozzle is moved by the moving means until the tip opening contacts a bottom surface of the well while the suction nozzle applies a suction force produced by the suction pressure, thereby enabling suction of the liquid from the well and/or the microchannel.

2. A liquid suction device as claimed in claim 1, wherein, after the suction nozzle has contacted the bottom surface of the well, the moving means causes relative movement of the suction nozzle in a direction away from the bottom surface of the well while the suction nozzle applies the suction force.

3. A liquid suction device as claimed in claim 1 or 2, wherein the tip opening is formed to be parallel to the bottom surface of the well.

4. A liquid suction device as claimed in any one of claims 1 to 3, further comprising a cushioning mechanism for cushioning the contact between the tip opening of the suction nozzle and the bottom surface of the well when the suction nozzle is moved down.

5. A liquid suction device as claimed in claim 4, wherein the cushioning mechanism comprises an elastic member.
